# EUROPEAN PATENT APPLICATION

(11) **EP 1 445 985 A2**
(43) Date of publication of application: **11.08.2004**
(21) Application number: 04250592.5
(22) Date of filing: 04.02.2004
(51) Int. Cl.: H05B 3/82

(54) **Electic heaters**

(30) Priority: 04.02.2003 GB 0302537
(71) Applicant: STRIX LIMITED, Ronaldsway, Isle of Man IM9 2RG (GB)
(72) Inventor: Scott, Michael James, Isle of Man IM9 5PH (GB); Ashton, Steven Anthony, Laxey Isle of Man IM4 7NR (GB); Parkes, David John Owen, Colby Isle of Man (GB)
(74) Representative: Samuels, Adrian James

(57) **Abstract**

An electric heater comprises a heater plate 2, a sheathed heating element 18 attached to the plate and a locating member 4 also attached to said heater plate 2, wherein co-operating locating features 8a,20 are provided on said locating member 4 and said element 18 to provide alignment between the element 18 and locating member 4.

## Description

This invention relates to electric heaters for liquid heating vessels, more particularly water boiling vessels; which comprise a heated plate which forms the base or part of the base of the vessel and which has a sheathed heating element mounted to the underside thereof.

In such heater arrangements it is necessary to provide suitable electrical interconnection between a control unit and the electrical terminations of the sheathed heating element, commonly known as "cold tails". Usually such interconnections take the form of solid or flexible wires soldered onto the cold tails and the contacts on the control. Alternatively, push-fit spade connectors might be used. However, the necessity for these interconnections adds both to the component cost and the assembly cost.

It would therefore be desirable to be able to make direct contact between the cold tails and a control e.g. through a resilient connection. However, it has been found that in practice to braze sheathed elements onto base plates at an economical cost, the positioning of the element and particularly the cold tails thereof is not sufficiently accurate or reliable to enable a sufficiently reliable electrical connection to be made this way.

It is an object of the present invention to alleviate the problems set out above and when viewed from a first aspect the invention provides an electric heater and control assembly comprising a heater plate, a locating member attached to said heater plate and a control unit mounted to said locating member, wherein co-operating locating features are provided on said locating member and a sheathed heating element also attached to the plate, to provide alignment between said element and said control unit.

The invention also extends to such an arrangement without the control unit being fitted and thus when viewed from a second aspect the invention provides an electric heater comprising a heater plate, a sheathed heating element attached to the plate and a locating member also attached to said heater plate, wherein co-operating locating features are provided on said locating member and said element to provide alignment between the element and locating member.

Thus it will be seen by those skilled in the art that reliable alignment between the heating element and a control unit may be provided by means of a locating member which mounts or is for mounting a control unit and which may be placed in a definite predetermined alignment with the element due to its locating features.

Such an arrangement has the advantage that direct resilient electrical connections between the element and control unit may be made, thereby eliminating the need for interconnections and their associated cost as outlined above.

Furthermore, the Applicants have appreciated that the arrangement described above also enables a sufficient accuracy in location for a thermal sensor provided on the control unit to be placed in direct thermal contact with the heating element. This provides particularly simple assembly since all thermal and electrical connections may be made simply by mounting the control unit to the locating member. Preferably therefore the control unit comprises a thermal sensor arranged to be in direct thermal contact with the element when the control unit is mounted to the locating member.

By having a thermal sensor in direct thermal contact with the element, overheating due to the heater boiling dry or being switched on dry may be rapidly detected. Furthermore, no heat diffusion plate or heat conduction member as described in EP-A-1215939 is necessary, although heaters having these are not excluded from the scope of such embodiments.

The thermal sensor is preferably a snap-acting bimetallic actuator since this may provide resettable protection against dry switch-on or boiling until dry or may even be part of normal operation of the heater-e.g. in a beverage maker where a quantity of water is boiled until it is all driven into a second chamber. Additionally or alternatively a thermal fuse is provided on said control unit in direct thermal contact with the heating element. This is particularly applicable in accordance with the invention where the point of contact may be precisely determined so that e.g. a normally relatively cooler portion of the element may be chosen to prevent the undesirable and irreversible consequences of thermal fuse interference - i.e. premature operation.

Preferably therefore the thermal fuse is in contact with the element in a region of the heater in which liquid preferentially collects - i.e. a part of the heater which is at least locally lower, since this will be the last part of the heater to overheat.

This arrangement is novel and inventive in its own right and thus when viewed from a further aspect the present invention provides an electric heater for a liquid heating vessel comprising a heater plate having a region thereof where liquid preferentially collects, a sheathed heating element mounted to the underside of the heater plate and a thermally sensitive control mounted to said heater plate and comprising a thermal fuse arranged to interrupt power to the element in the event of serious overheating of said element, said thermal fuse being in direct thermal contact with said heating element in a region thereof closest to the lower region of the heater plate.

The thermal fuse could comprise any suitable material which softens at the desired temperature or range e.g. solder and may be electrical or mechanical, but preferably a plastics, preferably nylon, member is employed.

The heater plate could take any convenient form in order to provide a region for the preferential collection of liquid in the desired location. for example a localised dip or pocket could be provided in the plate. In particularly preferred embodiments however, the heater plate is dished, most preferably with the liquid-facing side being concave in which case the liquid will tend to collect preferentially towards the centre of the heater. In such embodiments the thermal fuse will be located on a region of the element closest to the centre so that as the heater boils dry the central region will remain wet the longest and therefore the centre-most region of the element will remain coolest. This will allow time for a primary, resettable, cut-out to operate thereby avoiding premature operation of the thermal fuse, so called thermal fuse interference, which would normally render the heater inoperative.

The dished form of the heater plate gives rise to a significant additional advantage in that it gives the heater additional mechanical strength and minimises distortion due to pressure. This allows a thinner grade of metal to be used which decreases the cost of the heater and improves the thermal conductivity between the element and the liquid being heated. The increased mechanical strength is of particular benefit in the context of beverage making appliances such as mocha makers in which the interior heating chamber is subjected to elevated pressures.

It will be seen that such an arrangement is novel and inventive in it own right and thus when viewed from a further aspect the invention provides an electric heater for an electric heating vessel comprising a heater base and a sheathed heating element fixed to the underside of the base, wherein the base has a dished configuration with the liquid facing surface being concave.

Preferably the heater further comprises a control having a thermal fuse arranged in direct thermal contact with a portion of the element nearest to the centre of the heater base in accordance with the previous aspect of the invention.

It will be noted from the foregoing that in some aspects and in preferred embodiments of other aspects of the invention, a thermal fuse is located on a part of the element nearest to a lower region of the heater plate where water collects, such as in the centre where the heater is dished inwardly from the liquid-facing to the element side.

The element in such arrangements may follow any convenient shape which incorporates a region nearer to the centre of the heater, but preferably the element is in the form of a spiral extending over more than 360° such that at least two sections of the heated region thereof overlap one another. The thermal fuse may then be located on the inner one of said overlapping sections which would be the region of the element closest to the centre.

This configuration is also advantageous in that the region of overlap provides a convenient location for a primary overheat actuator such as a snap-acting bimetallic actuator which will therefore heat rapidly in the event that the heater boils dry or is switched on dry. This is of course beneficial in its own right from a safety perspective but also from the point of view of ensuring operation of the primary actuator before the operation of the thermal fuse. It will be seen therefore that two distinctive overheat cutout mechanisms may be optimised for their own performance but be provided on relatively closely adjacent regions of the element - thereby permitting a compact control unit.

In fact such an overlapping spiral arrangement is novel and inventive in its own right and thus when viewed from a further aspect the invention provides an electric heater assembly for a liquid heating vessel comprising a heater base plate and a sheathed heating element fixed to the underside of said heater plate wherein the element is in the form of a spiral extending over more than 360° such that two sections thereof overlap one another, the assembly further including thermally sensitive control means, comprising a resettable thermally responsive actuator in direct thermal contact with the two overlapping sections of the element.

In accordance with earlier aspects of the invention, the control means preferably comprises a thermal fuse in direct thermal contact with the innermost of the overlapping sections. Preferably the thermal fuse and resettable actuator are provided on an integrated control unit.

As will be appreciated from the foregoing, in at least preferred embodiments there is provided a thermally sensitive control means comprising a thermally responsive actuator operable to interrupt power to the heater in the event that the element overheats - e.g. by boiling dry. In some preferred embodiments a user operable mechanism is provided for switching the heater on and off. In a preferred example of such an arrangement, the thermally responsive actuator is arranged to act on the user operable mechanism to switch it off. This can provide a visual indication to a user that the power has been switched off by the dry-boil/dry-switch-on protection through the position of part of the user-operable mechanism which could be a switch, lever, knob, button or the like.

In another set of preferred embodiments, means are provided for a user to switch the heater on, but in order to switch it off, an appliance to which the heater and control assembly is fitted must be removed from its cordless base. In such embodiments the thermally responsive actuator is preferably arranged to latch open a set of contacts for supplying power to the element, said latch being reset upon said removal from the cordless base.

Certain preferred embodiments of the invention will now be described, by way of example only, with reference to the accompanying drawings in which:
Figure 1 is an isometric view of a heater base plate in accordance with the invention;
Figure 2 is a view of the base plate of Figure 1 from below with a control mounting bracket fitted thereto;
Figure 3 is a view similar to Figure 2 after the element has been fitted;
Figure 4 is an enlarged plan view of the element and mounting bracket showing their co-operating location features;
Figure 5 is a view similar to Figure 3 showing the location of a bimetallic actuator;
Figure 6 is a view similar to Figure 3 showing the location of a thermal fuse;
Figure 7 is an isometric view of a control unit fitted to a mounting bracket in accordance with the invention;
Figure 8 is a view of the assembly of Figure 7 with the element in place; and
Figure 9 is a view of a control in accordance with another embodiment of the invention coupled to the heating element.

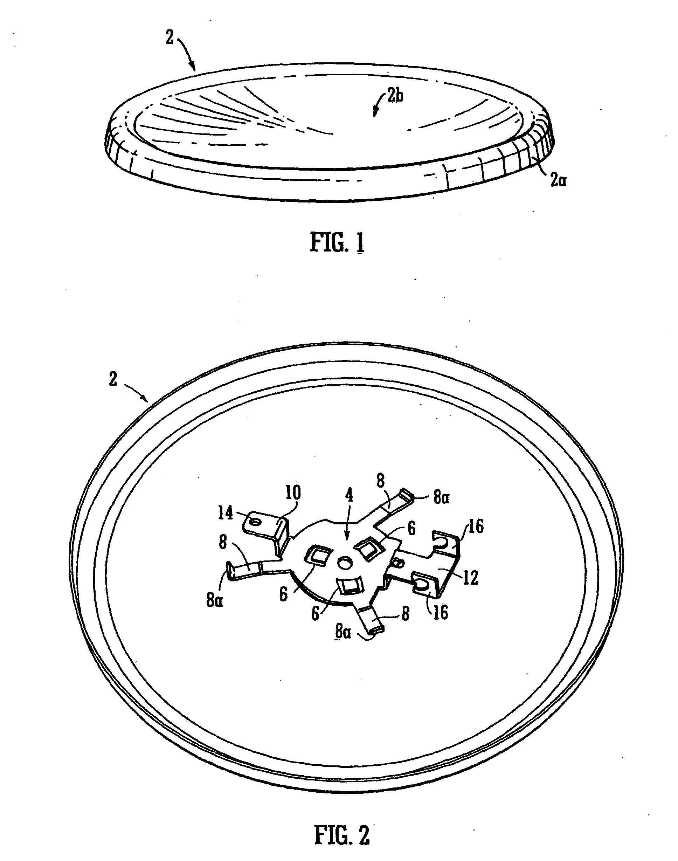

Turning firstly to Figure 1, a stainless steel base plate 2 for forming an electric heater in accordance with the invention is shown. In use the base plate 2 will form the base of, or close an opening in the base of, a liquid heating vessel such as a water boiling vessel - e.g. a mocha coffee maker. The plate 2 is significantly dished away from the water - i.e. so that the liquid facing side seen in Figure 1 is concave. In one particular example the curvature is spherical with a radius of curvature of 314 mm over a horizontal diameter of 117 mm at its highest point although any size greater than approximately 90 mm could be used. Furthermore, the edge of the plate is rolled over to form a peripheral skirt 2a. The dishing and peripheral skirt 2a both enhance the mechanical strength of the plate. Thus, a plate having a thickness of only 0.6 mm may be used to withstand even the elevated pressures found in mocha coffee makers.

The shape of the plate also means that if there is insufficient water on the plate 2 to cover it, the water will tend to collect at the centre 2b of the plate.

Figure 2 shows the underside of the plate 2 with a locating member in the form of a control mounting bracket 4 fixed centrally on the plate. The bracket has three tabs 6 protruding from beneath by which it is spot-welded to the plate 2. The tabs 6 have a degree of flexibility to enable them to conform to the curved surface of the plate 2. The bracket 4 also has three radially extending arms 8 with upturned ends 8a.

The bracket 4 further has a pair of vertically offset control mounting flanges 10, 12 for mounting a control unit. The leftmost flange 10 (when seen from Figure 2) has a hole 14 for receiving a screw which fixes the control to the bracket. The right flange 12 comprises a pair of vertically extending hook portions 16. These hooks 16 engage suitable corresponding features on the control unit (not shown), to allow the control unit to be fitted simply by clipping it into the two hooks 16 and then screwing it to the opposite flange 10 with a single screw. This enables simple, rapid assembly by a relatively unskilled assembler. The upper parts of the vertical hooks 16 are reduced in cross-section to promote flexing in the correct area during assembly.

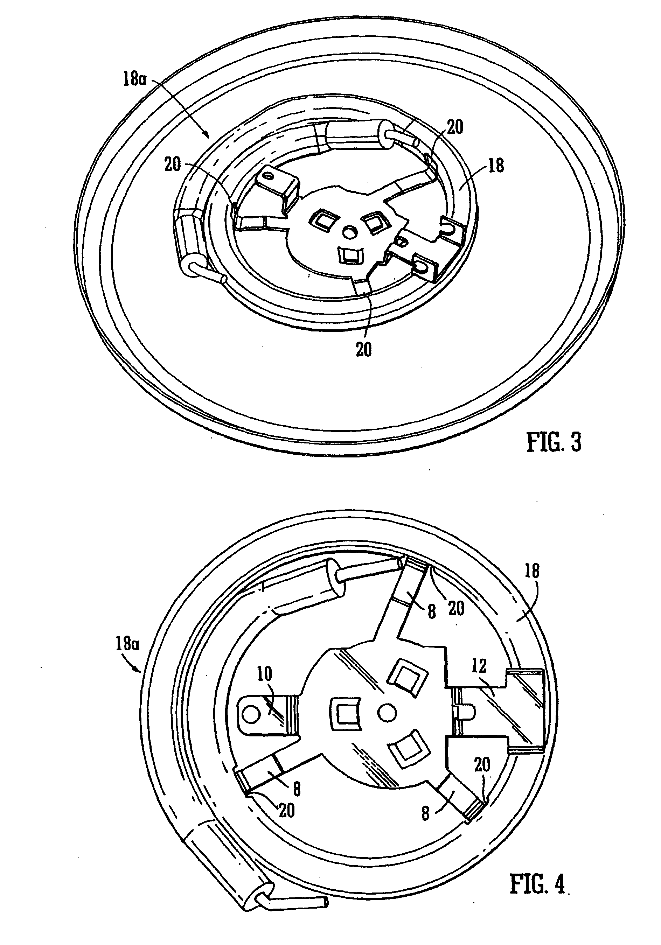

Figures 3 and 4 both show the sheathed heating element 18 (the base plate is omitted in Figure 4 for clarity). It will be seen that the element 18 is generally spiral in form, extending over more than 360° so that there is a region 18a where two sections overlap.

The element 18 has three notches 20 on the inner vertical wall of its sheath in which the three upturned arm ends 8a of the bracket locate. These ensure proper location of the element on the plate 2 but more importantly they also ensure proper relative location between the element 18 and a control unit fitted to the bracket 4.

The mounting bracket 4 is initially welded to the centre of the plate as mentioned above. Once the element 18 is fitted to the mounting bracket 4, it is brazed onto the plate to give a permanent attachment. It will be appreciated that the bracket 4 allows precise, permanent location of the control unit relative to the element 18, without the control unit in place (which would not be able to withstand the temperature of the brazing process).

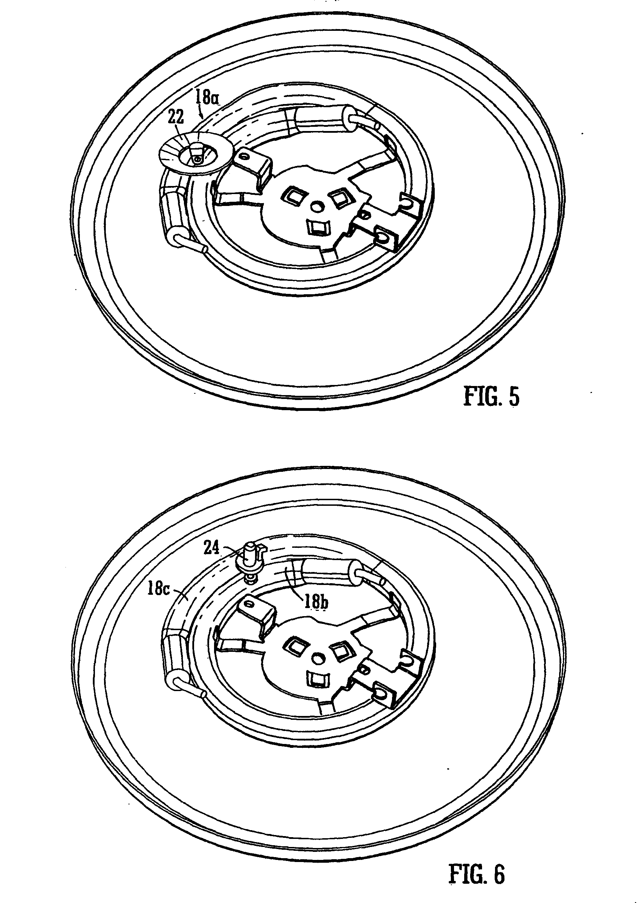

Figure 5 shows the location of a snap-acting bimetal 22. This is provided on the control unit, but the rest of the control unit is omitted for clarity. It will be seen that the bimetal 22 is located on the overlapping portions 18a of the element which means that it will receive a much higher heat input compared to if it had been located elsewhere on the element. The sheath of the element 18 just below the bimetal 22 is deliberately formed flatter than the remainder to ensure good thermal contact between the element 18 and the bimetal 22. This means that the micro profile of the remainder of the sheath surface need not be closely controlled. The location of the bimetal means that if the element 18 should overheat as a result of the vessel being switched on dry or boiling dry, it will heat up most rapidly and therefore trip the bimetal 22.

Figure 6 shows the location of the thermal fuse 24. Again the rest of the control unit, including the bimetal, has been omitted for clarity. The thermal fuse 24 is a nylon push rod with narrow neck portion. In use it is resiliently biased towards the element 18. If the element 18 should seriously overheat, the fuse 24 will begin to melt and will therefore be driven forward by the biasing force. This movement is used to open a set of contacts. Operation of this device is the same as that used in the Applicant's well known R series of controls and furthermore is described in detail in GB-A-2181598 and GB-A-2204450.

The thermal fuse 24 is in direct thermal contact with the innermost 18b of the overlapping sections of the element i.e. the region of the element closest to the centre of the plate. The dished profile of the heater plate 2 means that as the water in the vessel decreases as it starts to boil dry, the water will tend to collect in the centre. Thus the inner portion 18b of the element will be the last to be uncovered and so the thermal fuse 24 should only operate if the bimetal 22 has not.

It will be seen therefore that the arrangement described with reference to Figures 1 to 6 may be used in a mocha coffee maker to boil water. For example the heater shown in Figs 1 to 6 could be used in the beverage maker shown in Figs. 1 to 3 of EP-A-1232709 to relace the heater assembly shown therein. In other words the heater plate 2 is used to close an opening in the base of the appliance with a pressure-tight seal.

As water is heated by the heater 2 it is driven through a spout (not shown in present Figures) and therefore out of the heating chamber. As the water level reduces, it is increasingly confined just to the central region 2b of the plate. As the heater plate 2 directly above the outer part 18c of the spiral element is exposed first, that part of the element 18 will heat rapidly until it exceeds the threshold temperature of the bimetal 22 which then snaps to its reverse configuration to open a set of contacts in the control unit (not shown) and de-energise the element 18. By contrast, the inner portion 18b of the element remains cooler since it is still under water. Combined with the higher operation temperature of the thermal fuse 24, this prevents thermal fuse interference i.e. premature operation of the thermal fuse. If, however, the bimetal 22 or associated contacts should fail, the water will continue to be boiled away until the inner portion 18b of the element is exposed and the thermal fuse 24 will then melt, permanently opening its associated contacts and de-energising the element.

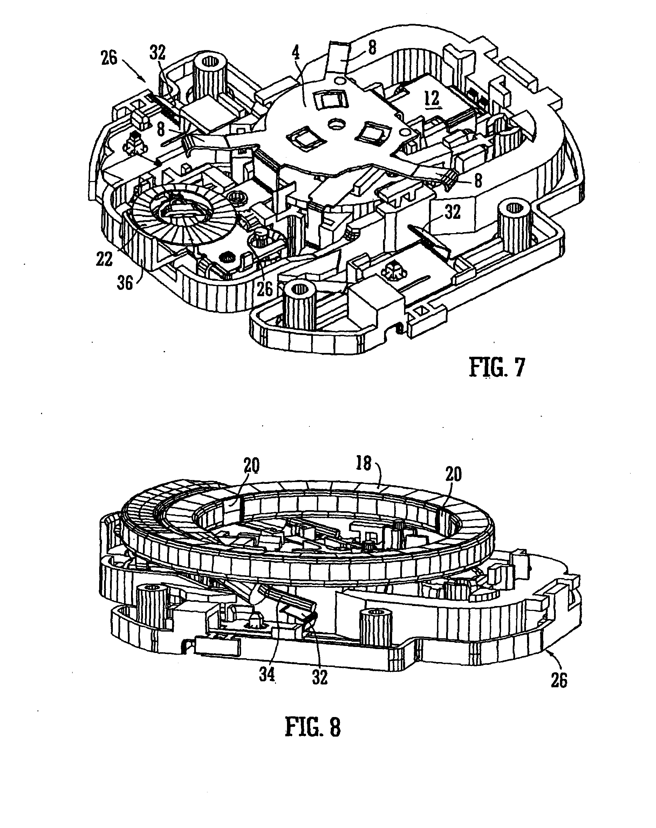

Figures 7 and 8 show respectively a control unit 26 fitted to the mounting bracket 4; and the control unit 26 with the element 18 (mounting bracket omitted for clarity).

Turning to the control unit 26 in Figure 7, the bimetal 22 and thermal fuse 24 previously described may be seen. The thermal fuse 24 is acted on by a coil spring (not visible) which has a tangentially extending bar at one end which can act to lift a leaf spring contact off another in the event that the thermal fuse 24 melts so that it no longer resists the spring. This operation is described more fully in GB-A-2181598.

The control unit 26 has a pair of resilient leaf spring contacts 32 for supplying electrical power to the cold tails 34 of the element 18 (Figure 8). As the control unit 26 is fitted into the bracket 4 the spring contacts 32 are made to bear on the cold tails 34 with sufficient pressure to ensure a good electrical contact. The bracket 4 also ensures proper alignment between the contacts 32 and the cold tails 34 and between the bimetal 22 and the thermal fuse 34 and their respective intended locations on the front face of the sheath of the element 18.

The control unit 26 also comprises an over-centre trip lever 36 which may be used to switch the element on and off. If the bimetal 22 reaches its operating temperature it will act via a push-rod to move the trip-lever 36 to its off position.

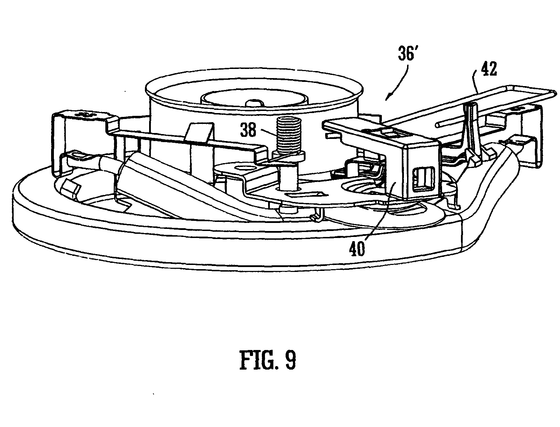

Finally, Figure 9 shows a control unit 26' and element 18 in accordance with another embodiment of the invention. The locations of the bimetal 22 and thermal fuse 24 against the face of the element may clearly be seen in this Figure. The coil spring 38 acting on the thermal fuse 24 may also be seen.

The main difference over the embodiment of Figures 7 and 8 is that instead of a trip-lever, a push button 40 is provided to close a set of contacts (not visible) to energise the heater. When the bimetal 22 operates, the contacts are opened by the associated push-rod and latched open by a hair spring 42 which gets "caught behind" the moving contact until released again by the push-button 40.

In all of the described embodiments the control unit comprises a 360° cordless connector of the type well known in the art and a sprung lever which acts to open a set of contacts and de-energise the heater e.g. by operating the trip lever where provided, wherein the event that the appliance is lifted from its cordless base.

## Claims

1. An electric heater comprising a heater plate, a sheathed heating element attached to the plate and a locating member also attached to said heater plate, wherein co-operating locating features are provided on said locating member and said element to provide alignment between the element and locating member.

2. An assembly comprising an electric heater as claimed in claim 1 and a control unit mounted to said locating member.

3. An electric heater and control assembly comprising a heater plate, a locating member attached to said heater plate and a control unit mounted to said locating member, wherein co-operating locating features are provided on said locating member and a sheathed heating element also attached to the plate, to provide alignment between said element and said control unit.

4. An assembly as claimed in claim 2 or 3 wherein said control unit comprises a thermal sensor in direct thermal contact with the element.

5. An assembly as claimed in claim 2, 3 or 4 wherein said thermal sensor is a snap-acting bimetallic actuator.

6. An assembly as claimed in any of claims 2 to 5 wherein said control unit comprises a thermal fuse in direct thermal contact with the element.

7. An assembly as claimed in claim 6 wherein the thermal fuse is in contact with the element in a region of the heater in which liquid preferentially collects.

8. An assembly as claimed in claim 6 or 7 wherein said thermal fuse comprises a plastics member.

9. An electric heater or assembly as claimed in any preceding claim wherein said heater plate is dished.

10. An electric heater or assembly as claimed in claim 9 wherein the liquid-facing side of the heater plate is concave.

11. An electric heater or assembly as claimed in any preceding claim wherein the element is in the form of a spiral extending over more than 360° such that at least two sections of the heated region thereof overlap one another.

12. An assembly as claimed in claim 11 when depended on any of claims 2 to 10 wherein said control unit comprises a thermal fuse in thermal contact with the innermost of the overlapping sections.

13. An electric heater for a liquid heating vessel comprising a heater plate having a region thereof where liquid preferentially collects, a sheathed heating element mounted to the underside of the heater plate and a thermally sensitive control mounted to said heater plate and comprising a thermal fuse arranged to interrupt power to the element in the event of serious overheating of said element, said thermal fuse being in direct thermal contact with said heating element in a region thereof closest to the lower region of the heater plate.

14. An electric heater for an electric heating vessel comprising a heater base and a sheathed heating element fixed to the underside of the base, wherein the base has a dished configuration with the liquid facing surface being concave.

15. An electric heater as claimed in claim 14 further comprising a control having a thermal fuse arranged in direct thermal contact with a portion of the element nearest to the centre of the heater base.

16. An electric heater assembly for a liquid heating vessel comprising a heater base plate and a sheathed heating element fixed to the underside of said heater plate wherein the element is in the form of a spiral extending over more than 360° such that two sections thereof overlap one another, the assembly further including thermally sensitive control means, comprising a resettable thermally responsive actuator in direct thermal contact with the two overlapping sections of the element.

17. An electric heater assembly as claimed in claim 16 comprising a thermal fuse in direct thermal contact with the innermost of the overlapping sections.
